(19) Europäisches Patentamt
European Patent Office
Office européen des brevets

(11) EP 2 137 262 B1

(12) **EUROPÄISCHE PATENTSCHRIFT**

(45) Veröffentlichungstag und Bekanntmachung des Hinweises auf die Patenterteilung:
**24.08.2011 Patentblatt 2011/34**

(21) Anmeldenummer: **08717905.7**

(22) Anmeldetag: **17.03.2008**

(51) Int Cl.:
***C08L 101/14*** *(2006.01)* ***C08J 3/12*** *(2006.01)*

(86) Internationale Anmeldenummer:
**PCT/EP2008/053169**

(87) Internationale Veröffentlichungsnummer:
**WO 2008/113788 (25.09.2008 Gazette 2008/39)**

# (54) VERFAHREN ZUM BESCHICHTEN WASSERABSORBIERENDER POLYMERPARTIKEL

METHOD FOR COATING WATER-ABSORBING POLYMER PARTICLES

PROCÉDÉ POUR REVÊTIR DES PARTICULES POLYMÈRES ABSORBANT L'EAU

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.03.2007 EP 07104407**

(43) Veröffentlichungstag der Anmeldung:
**30.12.2009 Patentblatt 2009/53**

(73) Patentinhaber: **BASF SE**
**67056 Ludwigshafen (DE)**

(72) Erfinder:
- **BARTHEL, Holger**
  **68723 Oftersheim (DE)**
- **WENDKER, Martin**
  **21465 Wentorf (DE)**
- **WITT, Reiner**
  **68789 St Leon-rot (DE)**

(56) Entgegenhaltungen:
**DE-A1- 3 523 617 DE-A1-102005 032 236**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 137 262 B1

## Beschreibung

Die vorliegende Erfindung betrifft ein Verfahren zur Herstellung wasserabsorbierender Polymerpartikel, wobei in einem Mischer wasserabsorbierenden Polymerpartikel mit einem partikulären Feststoff beschichtet werden, der partikuläre Feststoff mittels eines Gasstroms dispergiert wird und die Zuführung des dispergierten partikulären Feststoffs im Mischer unterhalb der Produktbettoberfläche endet.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Eigenschaften der wasserabsorbierenden Polymere können über den Vernetzungsgrad eingestellt werden. Mit steigendem Vernetzungsgrad steigt die Gelfestigkeit und sinkt die Zentrifugenretentionskapazität (CRC).

Zur Verbesserung der Anwendungseigenschaften, wie beispielsweise Permeabilität des gequollenen Gelbetts (SFC) in der Windel und Absorption unter Druck (AUL0.9psi), werden wasserabsorbierende Polymerpartikel im allgemeinen nachvernetzt. Dadurch steigt nur der Vernetzungsgrad der Partikeloberfläche, wodurch die Absorption unter Druck (AUL0.9psi) und die Zentrifugenretentionskapazität (CRC) zumindest teilweise entkoppelt werden können. Diese Nachvernetzung kann in wässriger Gelphase durchgeführt werden. Vorzugsweise werden aber getrocknete, gemahlene und abgesiebte Polymerpartikel (Grundpolymer) an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen der wasserabsorbierenden Polymere kovalente Bindungen bilden können.

An feuchter Atmosphäre verklumpen wasserabsorbierende Polymerpartikel und verlieren ihre Fließfähigkeit. Fließhilfsmittel können dieser Verklumpung entgegenwirken. Die Verwendung von feinverteiltem Siliciumdioxid wie Aerosil® 200 als Fließhilfsmittel für wasserabsorbierende Polymerpartikel ist seit langem bekannt, beispielsweise aus DE 35 23 617 A1.

Die Verwendung von feinverteiltem Siliciumdioxid führt zu einer erhöhten Staubbelastung. Daher hat es nicht an Versuchen gefehlt feinverteiltes Siliciumdioxid zu binden, beispielsweise beschrieben in JP 63-39934, oder feinverteiltes Siliciumdioxid durch andere Fließhilfsmittel zu ersetzen, beispielsweise beschrieben in WO 97/37695 A1.

DE 10 2005 032 236 A1 beschreibt ein Verfahren zum Beschichten von Partikeln, beispielsweise Pulverlacken, mit feinteiligen Partikeln, beispielsweise feinverteiltem Siliciumdioxid. Die feinteiligen Partikel werden mittels eines Gasstromes deagglomeriert. Das erhaltene Aerosol kann zur Verbesserung der Abscheidung mehrfach durch eine Schüttung der zu beschichtenden Partikel geleitet werden.

Aufgabe der vorliegenden Erfindung war die Bereitstellung eines verbesserten Verfahrens zur Beschichtung wasserabsorbierender Polymerpartikel mit partikulären Feststoffen.

Es bestand weiterhin die Aufgabe ein effizientes und staubarmes Beschichtungsverfahren zu finden.

Eine weitere Aufgabe war die Bereitstellung eines Verfahrens zur Herstellung von wasserabsorbierenden Polymerpartikeln mit einer möglichst niedrigen Verklumpungsneigung und hoher Fließfähigkeit, insbesondere nach Lagerung in feuchter Atmosphäre.

Gelöst wurde die Aufgabe durch ein Verfahren zur Herstellung wasserabsorbierender Polymerpartikel durch Polymerisation einer Monomerlösung oder -suspension, enthaltend

a) mindestens ein ethylenisch ungesättigtes, säuregruppentragendes Monomer, das zumindest teilweise neutralisiert sein kann,
b) mindestens einen Vernetzer,
c) optional ein oder mehrere mit den unter a) genannten Monomeren copolymerisierbare ethylenisch und/oder allylisch ungesättigte Monomere und
d) optional ein oder mehrere wasserlösliche Polymere,

umfassend Trocknung, Mahlung und Klassierung, wobei in einem Mischer wasserabsorbierenden Polymerpartikel mit einem partikulären Feststoff beschichtet werden, dadurch gekennzeichnet, dass der partikuläre Feststoff mittels eines Gasstroms dispergiert wird und die Zuführung des dispergierten partikulären Feststoffs im Mischer unterhalb der Produktbettoberfläche endet

Die Produktbettoberfläche ist die Grenzfläche, die sich zwischen den im Mischer bewegten wasserabsorbierenden Polymerpartikeln und der überlagernden Atmosphäre einstellt.

Der dispergierte partikuläre Feststoff wird als Aerosol unterhalb der Produktbettoberfläche in die bewegte Polymerpartikelschicht dosiert, d. h. die Zuführung taucht in das Produktbett ein, vorzugsweise mindestens 10 mm, besonders bevorzugt mindestens 50 mm, ganz besonders bevorzugt mindestens 100 mm.

Das erfindungsgemäße Verfahren umfasst vorzugsweise mindestens eine Nachvernetzung. In einer besonders

bevorzugten Ausführungsform der vorliegenden Erfindung werden nachvernetzte Polymerpartikel mit partikulären Feststoffen beschichtet.

Das Verhältnis von Massenstrom an partikulärem Feststoff zu dem zum Dispergieren verwendeten Gasmassenstrom (Dispergiergasmassenstrom) beträgt vorzugsweise mindestens 0,05, besonders bevorzugt mindestens 0,1 ganz besonders bevorzugt mindestens 0,2. Durch höhere Verhältnisse (Beladungen) kann der Verbrauch an Dispergiergas gesenkt werden. Beladungen von über 1 führen zu instationären Betriebszuständen beim Dispergieren und sind daher weniger bevorzugt.

Der mittleren Partikeldurchmesser der wasserabsorbierenden Polymerpartikel beträgt mindestens 200 μm, besonders bevorzugt von 250 bis 600 μm, ganz besonders von 300 bis 500 μm, wobei der Partikeldurchmesser durch Lichtstreuung bestimmt werden kann und den volumengemittelten mittleren Durchmesser bedeutet.

Der mittlere Partikeldurchmesser des partikulären Feststoffes beträgt weniger als 50 μm, besonders bevorzugt von 1 bis 20 μm, ganz besonders von 5 bis 10 μm, wobei der Partikeldurchmesser durch Lichtstreuung bestimmt werden kann und den volumengemittelten mittleren Durchmesser bedeutet.

Die Zuführung hat üblicherweise einen kreisförmigen Querschnitt.

Das erfindungsgemäße Verfahren ist wenig störanfällig und eignet sich daher besonders für kontinuierliche Mischer.

Der Füllgrad der Mischer beträgt vorzugsweise von 30 bis 80 %, besonders bevorzugt von 40 bis 75 %, ganz besonders bevorzugt von 50 bis 70 %.

Ein zu hoher Wassergehalt erhöht die Agglomerationsneigung der wasserabsorbierenden Polymerpartikel. Daher beträgt der Wassergehalt der im erfindungsgemäßen Verfahren einzusetzenden wasserabsorbierenden Polymerpartikel vorzugsweise weniger als 20 Gew.-%, besonders bevorzugt weniger als 10 Gew.-%, ganz besonders bevorzugt weniger als 1 Gew.-%.

Die Temperatur der wasserabsorbierenden Polymerpartikel beträgt vorzugsweise von 40 bis 80 °C, besonders bevorzugt von 45 bis 75 °C, ganz besonders bevorzugt von 50 bis 70 °C.

In einer bevorzugten Ausführungsform der vorliegenden Erfindung wird der partikuläre Feststoff mittels eines Ringspaltinjektors dispergiert.

Ein Ringspaltinjektor besteht aus einem Innenrohr und einen das Innenrohr umgebenden Ringspalt. Die Breite des Ringspaltes ist üblicherweise einstellbar. Der partikuläre Feststoff wird, beispielsweise mittels einer Förderschnecke, in das Innenrohr dosiert. Das Dispergiergas wird über den Ringspalt zugeführt. Der Druckabfall am Ringspalt beschleunigt das Dispergiergas und erzeugt einen Unterdruck. Der Druckabfall kann über den Dispergiergasmassenstrom und die Spaltbreite eingestellt werden und beträgt vorzugsweise von 0,5 bis 8 bar, besonders bevorzugt von 1 bis 6 bar, ganz besonders bevorzugt von 1,5 bis 5 bar. Durch den Unterdruck wird über das Innenrohr partikulärer Feststoff und Gas (Bypassgas) angesaugt. Gleichzeitig wird der partikuläre Feststoff im Gasstrom dispergiert. Das so erhaltene Aerosol kann mittels eines Rohres (Lanze), vorzugsweise mit dem Durchmesser des Innenrohres, unter die Produktbettoberfläche geführt werden.

Es ist auch möglich das Dispergiergas über das Innenrohr und den partikulären Feststoff über den Ringspalt zu dosieren. Aufgrund der erhöhten Verstopfungsgefahr ist diese Variante aber weniger bevorzugt.

Je nach Art und Menge des verwendeten partikulären Feststoffes können Mischer, Ringspaltinjektor und Lanze in ihrer Ausführungsform und Größe sowie ihren Betriebsbedingungen aufeinander abgestimmt werden. In Abhängigkeit von der zugeführten Dispergiergasmenge bildet sich vor der Lanze ein Hohlraum. Je größer der sich bildende Hohlraum ist, desto mehr den Hohlraum begrenzende Oberfläche steht für die direkte Beschichtung mit dem partikulären Feststoff zur Verfügung. Je schneller die den Hohlraum begrenzende Oberfläche durch den Mischprozess ausgetauscht wird, desto mehr wasserabsorbierende Polymerpartikel können pro Zeiteinheit beschichtet werden. Außerdem sollte möglichst wenig Fläche von den Mischerwerkzeugen beschichtet werden. Die Lanzen werden daher vorzugsweise axial zwischen den Mischwerkzeugen angeordnet. Der bevorzugte Mindestabstand zwischen der Austrittsöffnung der Lanzen und der Mischerwand bzw. -welle hängt von den Dichte des Produktbettes ab. Diese wird wesentlich von dem Betriebszustand des Mischers beeinflusst. Der Abstand zwischen der Austrittsöffnung der Lanzen und der Mischerwand bzw. - welle beträgt vorzugsweise mindestens 50 mm, besonders bevorzugt mindestens 100 mm, ganz besonders bevorzugt mindestens 200 mm. Bei kleineren Mischern werden kleinere Abstände gewählt als bei größeren.

Beispielsweise ergeben sich für die Beschichtung mit bevorzugt einzusetzender pyrogener Kieselsäure und/oder Fällungskieselsäure mittels einer Lanze mit einem Innendurchmesser von 25 bis 30 mm ein Dispergiergasmassenstrom von vorzugsweise 2 bis 70 kg/h, besonders bevorzugt von 3 bis 50 kg/h, ganz besonders bevorzugt von 3,5 bis 35 kg/h, Bypassgasmassenstrom von vorzugsweise 5 bis 70 kg/h, besonders bevorzugt von 10 bis 50 kg/h, ganz besonders bevorzugt von 15 bis 25 kg/h, und ein Massenstrom an partikulären Feststoff von vorzugsweise 0,5 bis 120 kg/h, besonders bevorzugt von 2 bis 60 kg/h, ganz besonders bevorzugt von 4 bis 40 kg/h.

Im erfindungsgemäßen Verfahren können alle dem Fachmann bekannten Mischer eingesetzt werden. Die Flüssigkeit kann sowohl in Hochgeschwindigkeitsmischern als auch in Mischern mit geringer Rührgeschwindigkeit aufgesprüht werden. Vorzugsweise werden Mischer mit bewegten Mischwerkzeugen, wie Schneckenmischer, Scheibenmischer, Pflugscharmischer, Schaufelmischer, Schraubenbandmischer, Schugi-Mischer und Durchlaufmischer, eingesetzt.

Mischer mit rotierenden Mischwerkzeugen werden gemäß der Lage der Rotationsachse in Vertikalmischer und Horizontalmischer unterteilt. Die Verwendung von Horizontalmischern ist bevorzugt. Ein besonders bevorzugter Horizontalmischer ist der Durchlaufmischer.

Die Verweilzeit im Horizontalmischer beträgt vorzugsweise von 1 bis 180 Minuten, besonders bevorzugt von 2 bis 60 Minuten, ganz besonders bevorzugt von 5 bis 20 Minuten.

Die Umfangsgeschwindigkeit der Mischwerkzeuge im Horizontalmischer beträgt vorzugsweise von 0,1 bis 10 m/s, besonders bevorzugt von 0,5 bis 5 m/s, ganz besonders bevorzugt von 0,75 bis 2,5 m/s.

Die wasserabsorbierenden Polymerpartikel werden im Horizontalmischer mit einer Geschwindigkeit bewegt, die einer Froude-Zahl von vorzugsweise 0,01 bis 6, besonders bevorzugt 0,05 bis 3, ganz besonders bevorzugt 0,1 bis 0,7, entspricht.

Für Mischer mit horizontal gelagertem Mischwerkzeugen ist die Froude-Zahl wie folgt definiert:

$$Fr = \frac{\omega^2 r}{g}$$

mit

r: Radius des Mischwerkzeugs
w: Kreisfrequenz
g: Erdbeschleunigung:

Im Horizontalmischer beträgt der Winkel zwischen der Mischerachse und der Zuführung vorzugsweise ca. 90°. Der dispergierte partikuläre Feststoff kann senkrecht von oben zugeführt werden. Ein Zuführung schräg von der Seite ist ebenfalls möglich, wobei der Winkel gegenüber der Senkrechten vorzugsweise zwischen 60 und 90°, besonders bevorzugt zwischen 70 und 85°, ganz besonders bevorzugt zwischen 75 und 82,5°, liegt. Die schräge Anordnung der Zuführung ermöglicht die Verwendung kürzerer Zuführungen und damit geringere mechanische Belastungen während des Betriebs des Mischers.

In einer besonders bevorzugten Ausführungsform endet die Zuführung unterhalb der Rotationsachse und dosiert in Rotationsrichtung. Durch diese Anordnung werden die beschichteten wasserabsorbierenden Polymerpartikel optimal von der Zuführung weggefördert. In Kombination mit der schrägen Anordnung ist es auch möglich die Zuführung während des Betriebs des Mischers auszutauschen, ohne dass Produkt austritt.

Geeignete partikuläre Feststoffe sind beispielsweise anorganische inerte Substanzen wie pyrogene Kieselsäuren und/oder Fällungskieselsäuren.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden

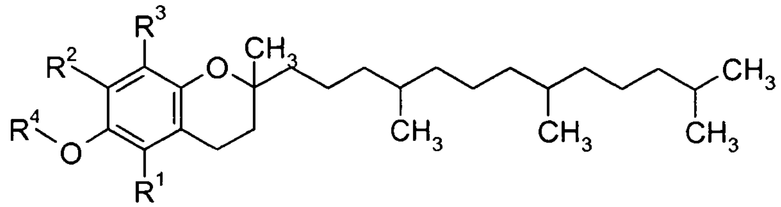

wobei $R^1$ Wasserstoff oder Methyl, $R^2$ Wasserstoff oder Methyl, $R^3$ Wasserstoff oder Methyl und $R^4$ Wasserstoff oder ein Säurerest mit 1 bis 20 Kohlenstoffatomen bedeutet.

Bevorzugte Reste für $R^4$ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit $R^1 = R^2 = R^3$ = Methyl, insbesondere racemisches alpha-Tocopherol. $R^1$ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth) acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 100 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Menge an Vernetzer b) beträgt vorzugsweise 0,01 bis 15 Gew.-%, besonders bevorzugt 0,5 bis 10 Gew.-%, ganz besonders bevorzugt 1 bis 5 Gew.-%, jeweils bezogen auf die Monomerlösung.

Mit den ethylenisch ungesättigten, säuregruppentragenden Monomeren a) copolymerisierbare ethylenisch ungesättigte Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die bevorzugten Polymerisationsinhibitoren benötigen für eine optimale Wirkung gelösten Sauerstoff. Daher

kann die Monomerlösung vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Herstellung eines geeigneten Polymers sowie weitere geeignete hydrophile ethylenisch ungesättigte Monomere a) werden in DE 199 41 423 A1, EP 686 650 A1, WO 2001/45758 A1 und WO 2003/104300 A1 beschrieben.

Geeignete Reaktoren sind Knetreaktoren oder Bandreaktoren. Im Kneter wird das bei der Polymerisation einer wässrigen Monomerlösung entstehende Polymergel durch beispielsweise gegenläufige Rührwellen kontinuierlich zerkleinert, wie in WO 20001/38402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Fleischwolf, Extruder oder Kneter.

Vorteilhaft wird das Hydrogel nach dem Verlassen des Polymerisationsreaktors noch bei höherer Temperatur, vorzugsweise mindestens 50°C, besonders bevorzugt mindestes 70°C, ganz besonders bevorzugt mindestens 80°C, sowie vorzugsweise weniger als 100°C, gelagert, beispielsweise in isolierten Behältern. Durch die Lagerung, üblicherweise 2 bis 12 Stunden, wird der Monomerumsatz weiter erhöht.

Bei höheren Monomerumsätzen im Polymerisationsreaktor kann die Lagerung auch deutlich verkürzt bzw. auf eine Lagerung verzichtet werden.

Die Säuregruppen der erhaltenen Hydrogele sind üblicherweise teilweise neutralisiert, vorzugsweise zu 25 bis 95 mol-%, bevorzugt zu 50 bis 80 mol-%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23 °C vorliegen. In diesem Fall ist eine Dosierung als Stückgut oder Schmelze bei erhöhter Temperatur möglich.

Es ist aber auch möglich die Neutralisation nach der Polymerisation auf der Stufe des Hydrogels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Wird das Hydrogel zumindest teilweise nach der Polymerisation neutralisiert, so wird das Hydrogel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Hydrogel wird dann vorzugsweise mit einem Bandtrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. WSP 230.2-05 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß um so einfacher und das Produkt um so weißer, wenn der Feststoffgehalt des Gels möglichst hoch ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern.

Das getrocknete Hydrogel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die Polymerpartikel können zur weiteren Verbesserung der Eigenschaften nachvernetzt werden. Geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1

2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

In einer bevorzugten Ausführungsform der vorliegenden Erfindung werden zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 0,5 Gew.-%, vorzugsweise 0,005 bis 0,2 Gew.-%, besonders bevorzugt 0,02 bis 0,1 Gew.-%. jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen werden die mit der Nachvernetzer beschichteten Polymerpartikel thermisch getrocknet, wobei die Nachvernetzungsreaktion sowohl vor als auch während der Trocknung stattfinden kann.

Das Aufsprühen einer Lösung des Nachvernetzers wird vorzugsweise in Mischern mit bewegten Mischwerkzeugen, wie Schneckenmischer, Scheibenmischer, Pflugscharmischer und Schaufelmischer, durchgeführt werden. Besonders bevorzugt sind Horizontalmischer, wie Pflugscharmischer und Schaufelmischer, ganz besonders bevorzugt sind Vertikalmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250 °C, bevorzugt 120 bis 220 °C, und besonders bevorzugt 130 bis 210 °C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Anschließend kann das nachvernetzte Polymer erneut klassiert werden.

Die nachvernetzten Polymerpartikel können zur weiteren Verbesserung der Eigenschaften beschichtet werden. Geeignete Beschichtungen zur Verbesserung des Akquisitionsverhaltens sowie der Permeabilität (SFC) sind beispielsweise anorganische inerte Substanzen, organische Polymere, kationische Polymere sowie zwei- oder mehrwertige Metallkationen. Geeignete Beschichtungen zur Staubbindung sind beispielsweise Polyole.

Geeignete anorganische inerte Substanzen sind Silikate, wie Montmorillonit, Kaolinit und Talk, Zeolithe, Aktivkohlen, Polykieselsäuren, Magnesiumcarbonat, Calciumcarbonat, Bariumsulfat, Aluminiumoxid, Titandioxid und Eisen-(II)-oxid. Bevorzugt gelangen Polykieselsäuren zum Einsatz, die je nach Herstellungsart zwischen Fällungskieselsäuren und pyrogenen Kieselsäuren unterschieden werden. Beide Varianten sind unter den Namen Silica FK, Sipernat®, Wessalon® (Fällungskieselsäuren) bzw. Aerosil® (pyrogene Kieselsäuren) kommerziell erhältlich. Die anorganischen inerten Substanzen können als Dispersion in einem wässrigen oder wassermischbaren Dispergiermittel oder in Substanz eingesetzt werden.

Die gemäß dem erfindungsgemäßen Verfahren einzusetzenden partikulären Feststoffe sind vorzugsweise pyrogene Kieselsäuren und/oder Fällungskieselsäuren.

Werden die wasserabsorbierenden Polymerpartikel mit einem anorganischen inerten Material beschichtet, so beträgt die Einsatzmenge an anorganischem inerten Material bezogen auf die wasserabsorbierenden Polymerpartikel vorzugsweise von 0,05 bis 5 Gew.-%, besonders bevorzugt von 0,1 bis 1,5 Gew.-%, ganz besonders bevorzugt von 0,3 bis 1 Gew.-%.

Geeignete organischen Materialien sind Polyalkylmethacrylate oder Thermoplaste, wie Polyvinylchlorid.

Geeignete kationische Polymere sind Polyalkylenpolyamine, kationischen Derivate von Polyacrylamiden, Polyethylenimine und polyquartäre Amine.

Polyquartäre Amine sind beispielsweise Kondensationsprodukte aus Hexamethylendiamin, Dimethylamin und

Epichlorhydrin, Kondensationsprodukte aus Dimethylamin und Epichlorhydrin, Copolymere aus Hydroxyethylcellulose und Diallyldimethylammoniumchlorid, Copolymere aus Acrylamid und $\alpha$-Methacrylyloxyethyltrimethylammoniumchlorid, Kondensationsprodukte aus Hydroxyethylcellulose, Epichlorhydrin und Trimethylamin, Homopolymerisate von Diallyldimethylammoniumchlorid und Additionsprodukte von Epichlorhydrin an Amidoamine. Des Weiteren können polyquartäre Amine durch Umsetzung von Dimethylsulfat mit Polymeren, wie Polyethyleniminen, Copolymere aus Vinylpyrrolidon und Dimethylaminoethylmethacrylat oder Copolymere aus Ethylmethacrylat und Diethylaminoethylmethacrylat erhalten werden. Die polyquartären Amine sind in einem breiten Molekulargewichtsbereich verfügbar.

Es ist aber auch möglich die kationische Polymere auf der Partikeloberfläche zu erzeugen, entweder durch Reagenzien, die mit sich selbst ein Netzwerk bilden können, wie Additionsprodukte von Epichlorhydrin an Polyamidoamine, oder durch die Auftragung von kationischen Polymeren, die mit einem zugesetzten Vernetzer reagieren können, wie Polyamine oder Polyimine in Kombination mit Polyepoxiden, multifunktionellen Estern, multifunktionellen Säuren oder multifunktionellen (Meth)acrylaten.

Zum Einsatz gelangen können alle multifunktionellen Amine mit primären oder sekundären Aminogruppen, wie Polyethylenimin, Polyallylamin und Polylysin. Die gemäß dem erfindungsgemäßen Verfahren versprühte Flüssigkeit enthält vorzugsweise mindestens ein Polyamin, beispielsweise Polyvinylamin.

Die kationischen Polymere können als Lösung in einem wässrigen oder wassermischbaren Lösungsmittel, als Dispersion in einem wässrigen oder wassermischbaren Dispergiermittel oder in Substanz eingesetzt werden.

Werden die wasserabsorbierenden Polymerpartikel mit einem kationischen Polymer beschichtet, so beträgt die Einsatzmenge an kationischem Polymere bezogen auf die wasserabsorbierenden Polymerpartikel vorzugsweise von 0,1 bis 15 Gew.-%, besonders bevorzugt von 0,5 bis 10 Gew.-%, ganz besonders bevorzugt von 1 bis 5 Gew.-%.

Geeignete zwei- oder mehrwertige Metallkationen sind $Mg^{2+}$, $Ca^{2+}$, $Al^{3+}$, $Sc^{3+}$, $Ti^{4+}$, $Mn^{2+}$, $Fe^{2+/3+}$, $Co^{2+}$, $Ni^{2+}$, $Cu^{+/2+}$, $Zn^{2+}$, $Y^{3+}$, $Zr^{4+}$, $Ag^{+}$, $La^{3+}$, $Ce^{4+}$, $Hf^{4+}$, und $Au^{+/3+}$, bevorzugte Metallkationen sind $Mg^{2+}$, $Ca^{2+}$, $Al^{3+}$, $Ti^{4+}$, $Zr^{4+}$ und $La^{3+}$, besonders bevorzugte Metallkationen sind $Al^{3+}$, $Ti^{4+}$ und $Zr^{4+}$. Die Metallkationen können sowohl allein als auch im Gemisch untereinander eingesetzt werden. Von den genannten Metallkationen sind alle Metallsalze geeignet, die eine ausreichende Löslichkeit in dem zu verwendenden Lösungsmittel besitzen. Besonders geeignet sind Metallsalze mit schwach komplexierenden Anionen, wie Chlorid, Nitrat und Sulfat. Die Metallsalze werden vorzugsweise als Lösung eingesetzt. Als Lösungsmittel für die Metallsalze können Wasser, Alkohole, Dimethylformamid, Dimethylsulfoxid sowie Mischungen davon eingesetzt werden. Besonders bevorzugt sind Wasser und Wasser/Alkohol-Mischungen, wie Wasser/Methanol oder Wasser/Propylenglykol.

Werden die wasserabsorbierenden Polymerpartikel mit einem mehrwertigen Metallkation beschichtet, so beträgt die Einsatzmenge an mehrwertigem Metallkation bezogen auf die wasserabsorbierenden Polymerpartikel vorzugsweise von 0,05 bis 5 Gew.-%, besonders bevorzugt von 0,1 bis 1,5 Gew.-%, ganz besonders bevorzugt von 0,3 bis 1 Gew.-%.

Besonders geeignete Polyole sind Polyethylenglykole mit einem Molekulargewicht von 400 bis 20000 g/mol, Polyglyzerin, 3- bis 100-fach ethoxylierte Polyole, wie Trimethylolpropan, Glyzerin, Sorbitol und Neopentylglykol. Besonders geeignet sind 7- bis 20-fach ethoxyliertes Glyzerin oder Trimethylolpropan, wie beispielsweise Polyol TP 70® (Perstorp AB, Perstorp, SE). Letztere haben insbesondere den Vorteil, dass sie die Oberflächenspannung eines wässrigen Extrakts der wasserabsorbierenden Polymerpartikel nur unwesentlich herabsetzen. Die Polyole werden vorzugsweise als Lösung in wässrigen oder wassermischbaren Lösungsmittel eingesetzt.

Werden die wasserabsorbierenden Polymerpartikel mit einem Polyol beschichtet, so beträgt die Einsatzmenge an Polyol bezogen auf die wasserabsorbierenden Polymerpartikel vorzugsweise von 0,005 bis 2 Gew.-%, besonders bevorzugt von 0,01 bis 1 Gew.-%, ganz besonders bevorzugt von 0,05 bis 0,5 Gew.-%.

Die obengenannten Beschichtungen können aber auch auf nicht nachvernetzte Polymerpartikel (Grundpolymer) aufgebracht werden.

Das erfindungsgemäße Verfahren ermöglicht eine staubfreie Beschichtung wasserabsorbierender Polymerpartikel mit partikulären Feststoffen, insbesondere feinteiligen Siliciumdioxid. Gegenüber dem Stand der Technik wird eine erhöhte Abscheiderate und damit eine höhere Ausbeute erzielt.

Das erfindungsgemäße Verfahren ermöglicht die Herstellung wasserabsorbierender Polymerpartikel mit einer besonders niedrigen Verklumpungsneigung (Anticaking) bzw. den Einsatz deutlich reduzierter Mengen des Fließhilfsmittels, beispielsweise feinteiligem Siliciumdioxid.

Das erfindungsgemäße Verfahren kann auch vorteilhaft mit anderen Beschichtungsverfahren kombiniert werden. In dem zur Beschichtung mit partikulären Feststoffen, vorzugsweise pyrogener Kieselsäure und/oder Fällungskieselsäure, verwendeten Mischer können auch zusätzliche Beschichtungen durchgeführt werden. Die zusätzlichen Beschichtungen können beispielsweise als Lösung oder Dispersion auf die wasserabsorbierenden Polymerpartikel aufgebracht werden. Vorteilhaft wird die Beschichtung mit den partikulären Feststoffen zuletzt durchgeführt.

Werden in einem kontinuierlichen Horizontalmischer derartige weitere Beschichtungen durchgeführt, so beträgt die Verweilzeit der wasserabsorbierenden Polymerpartikel vor dem Beschichten mit dem partikulären Feststoff vorzugsweise von 50 bis 90%, besonders bevorzugt von 60 bis 80%, ganz besonders bevorzugt von 70 bis 75%, der Gesamtverweilzeit im Mischer.

Das erfindungsgemäße Verfahren ist unempfindlich gegen zusätzliche Gasströme im Mischer, die beispielsweise auftreten, wenn Lösungen und/oder Dispersionen mittels Zweistoffdüsen eingebracht werden oder Lösungsmittel verdampfen.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g.

Die gemäß dem erfindungsgemäßen Verfahren erhältlichen wasserabsorbierenden Polymerpartikel weisen eine Absorption unter Druck von 6,21 kPa (AUL0.9psi) von typischerweise mindestens 10 g/g, vorzugsweise mindestens 12 g/g, bevorzugt mindestens 14 g/g, besonders bevorzugt mindestens 16 g/g, ganz besonders bevorzugt mindestens 18 g/g, und üblicherweise nicht über 30 g/g, auf.

Die gemäß dem erfindungsgemäßen Verfahren erhältlichen wasserabsorbierenden Polymerpartikel weisen eine Flüssigkeitsweiterleitung (SFC) von typischerweise mindestens $100x10^{-7}cm^3s/g$, meist mindestens $200x10^{-7}cm^3s/g$, vorzugsweise mindestens $300x10^{-7}cm^3s/g$, bevorzugt mindestens $350x10^{-7}cm^3s/g$, besonders bevorzugt mindestens $400x10^{-7}cm^3s/g$, ganz besonders bevorzugt mindestens $450x10^{-7}cm^3s/g$, und üblicherweise nicht über $700x10^{-7}cm^3s/g$, auf.

Die wasserabsorbierenden Polymerpartikel werden mit den nachfolgend beschriebenen Testmethoden geprüft.

Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

Partikelgrößenverteilung (PSD Particle Size Distribution)

Die Partikelgrößenverteilung der wasserabsorbierenden Polymerpartikel wird analog der von der EDANA (European Disposables and Nonwovens Association) empfohlenen Testmethode Nr. WSP 220.2-05 "Particle size distribution" bestimmt.

Zentrifugenretentionskapazität (CRC Centrifuge Retention Capacity)

Die Zentrifugenretentionskapazität wird analog der von der EDANA (European Disposables and Nonwovens Association) empfohlenen Testmethode Nr. WSP 241.2-05 "Centrifuge retention capacity" bestimmt, wobei die wasserabsorbierenden Polymerpartikel vor der Messung auf den Partikelgrößenbereich von größer 300 bis 600 μm abgesiebt werden.

Absorption unter Druck (AUL0.9psi Absorbency Under Load)

Die Absorption unter einem Druck von 6,21 kPa (0,9 psi) der wasserabsorbierenden Polymerpartikel wird analog der von der EDANA (European Disposables and Nonwovens Association) empfohlenen Testmethode Nr. WSP 242.2-05 "Absorption under pressure" bestimmt, wobei 0,16 g wasserabsorbierende Polymerpartikel mit einem Partikelgrößenbereich von größer 300 bis 600 μm statt 0,9 g wasserabsorbierende Polymerpartikel, als Unterboden ein Drahtnetz mit einer Maschenweite von 149 μm statt einer Maschenweite von 36 μm und ein Gewicht mit 63 $g/cm^2$ (0,9 psi) statt eines Gewichts mit 21 $g/cm^2$ (0,3 psi) verwendet werden.

Extrahierbare 16h

Der Gehalt an extrahierbaren Bestandteilen der wasserabsorbierenden Polymerpartikel wird gemäß der von der EDANA (European Disposables and Nonwovens Association) empfohlenen Testmethode Nr. WSP 270.2-05 "Extractables" bestimmt.

Flüssigkeitsweiterleitung (SFC Saline Flow Conductivity)

Die Flüssigkeitsweiterleitung einer gequollenen Gelschicht unter Druckbelastung von 21 $g/cm^2$ (0,3 psi) wird, wie in EP 0 640 330 A1 beschrieben, als Gel-Layer-Permeability einer gequollenen Gelschicht aus wasserabsorbierenden

Polymerpartikeln bestimmt, wobei die in zuvor genannter Patentanmeldung auf Seite 19 und in Figur 8 beschriebene Apparatur dahingehend modifiziert wurde, dass die Glasfritte (40) nicht mehr verwendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP 0 640 330 A1. Der Durchfluß wird automatisch erfaßt.

Die Flüssigkeitsweiterleitung (SFC) wird wie folgt berechnet:

$$SFC\ [cm^3 s/g] = (Fg(t=0) x L0)/(d x A x WP),$$

wobei Fg(t=0) der Durchfluß an NaCl-Lösung in g/s ist, der anhand einer linearen Regressionsanalyse der Daten Fg(t) der Durchflußbestimmungen durch Extrapolation gegen t=0 erhalten wird, L0 die Dicke der Gelschicht in cm, d die Dichte der NaCl-Lösung in $g/cm^3$, A die Fläche der Gelschicht in $cm^2$ und WP der hydrostatische Druck über der Gelschicht in $dyn/cm^2$ darstellt.

Anticaking

Das Anticaking wird gemäß der in WO 00/10619 A1 auf Seite 22, Zeile 11, bis Seite 24, Zeile 6, beschriebenen Methode bestimmt.

Staub in Abluft

Der Staubanteil in der Abluft wird wie folgt visuell beurteilt:

O = keine Staubbelastung der Abluft
+ = spürbare Staubbelastung der Abluft
++ = starke Staubbelastung der Abluft

Die EDANA-Testmethoden sind beispielsweise erhältlich bei der European Disposables and Nonwovens Association, Avenue Eugène Plasky 157, B-1030 Brüssel, Belgien.

Beispiele:

Die Beispiele wurden mit handelsüblichen wasserabsorbierenden Polymerpartikeln auf Natriumacrylatbasis durchgeführt.

Derartige wasserabsorbierende Polymerpartikel sind z.B. von BASF Aktiengesellschaft (Handelsname Hy-Sorb®), von Stockhausen GmbH (Handelsname Favor®) und von Nippon Shokubai Co., Ltd. (Handelsname Aqualic®) kommerziell erhältlich.

Die verwendeten wasserabsorbierenden Polymerpartikel hatten folgendes Eigenschaftsprofil:

| | |
|---|---|
| CRC: | 26,5 g/g |
| AUL0.9psi: | 21 g/g |
| SFC: | $120x10^{-7}\ cm^3 s/g$ |
| Extractables 16h:7,8 | Gew.-% |
| PSD: >850μm | 0,7 Gew.-% |
| 600-850μm31,3 | Gew.-% |
| 300-600μm50,5 | Gew.-% |
| 90-300μm | 17,3 Gew.-% |
| <90μm | 0,2 Gew.-% |

Beispiel 1

Die wasserabsorbierenden Polymerpartikel wurden in einem Ruberg-Durchlaufmischer Typ DLM 350-1500 (Gebrüder Ruberg GmbH & Co KG, Nieheim, DE) mittels eines Ringspaltinjektors mit 0,3 Gew.-% Sipernat® D17 (Degussa GmbH, Düsseldorf, DE) beschichtet. Sipernat® D17 ist eine hydrophobierte Fällungskieselsäure.

Der Durchlaufmischer hatte ein Mischkammervolumen von 140 l. Der Füllgrad des Durchlaufmischers betrug 60% und die Drehzahl betrug 43 $min^{-1}$. Die Froude-Zahl der bewegten wasserabsorbierenden Polymerpartikel betrug 0,36.

Der Ringspaltinjektor bestand aus einen Innenrohr mit einem Durchmesser von 8 mm. Über das Innenrohr wurden 0,49 kg/h Sipernat® D17 dosiert. Das Innenrohr umgab ein verstellbarer Ringspalt. Über den Ringspalt wurden 5 kg/h Luft (Dispergiergas) zugeführt. Der Vordruck des Dispergiergases betrug 0,5 bar. Durch den Ringspalt wurde das Dispergiergas beschleunigt und ein Unterdruck erzeugt. Durch den Unterdruck wurde über das Innenrohr Luft (Bypassgas) und Sipernat® D17 angesaugt und im Luftstrom dispergiert. Das dispergierte Sipernat® D17 wurde mittels eines Rohres (Lanze) mit einem Innendurchmesser von 8 mm im Gleichstrom zur Rotationsrichtung in den Durchlaufmischer geführt.

Der Abstand der Lanze von der Stirnwand des Durchlaufmischers betrug 1125 mm und der horizontale Abstand der Lanzenmündung von der Mischerwand betrug 50 mm. Die Lanze war senkrecht eingebaut. Die Lanze wurde senkrecht von oben in den Durchlaufmischer eingesteckt und endete 100 mm unterhalb der bewegten Produktbettoberfläche.

Die Verweilzeit der wasserabsorbierenden Polymerpartikeln im Mischer betrug 20 Minuten. Die Temperatur der wasserabsorbierenden Polymerpartikel betrug 60 °C.

Der Durchlaufmischer wurde mehrere Stunden störungsfrei betrieben.

Die beschichteten wasserabsorbierenden Polymerpartikel wurden analysiert. Die Ergebnisse sind in der Tabelle 1 zusammengefasst.

Beispiel 2 (Vergleichsbeispiel)

Es wurde verfahren wie unter Beispiel 1. Sipernat® D17 wurde mittels des Ringspaltinjektors dispergiert. Die Lanze wurde senkrecht von oben in den Durchlaufmischer eingesteckt und endete oberhalb der bewegten Produktbettoberfläche.

Der Durchlaufmischer wurde mehrere Stunden störungsfrei betrieben.

Die beschichteten wasserabsorbierenden Polymerpartikel wurden analysiert. Die Ergebnisse sind in der Tabelle 1 zusammengefasst.

Beispiel 3 (Vergleichsbeispiel)

Es wurde verfahren wie unter Beispiel 1. Sipernat® D17 wurde über ein Rohr mit einem Innendurchmesser von 8 mm dosiert. Das Rohr endete 100 mm unterhalb der bewegten Produktbettoberfläche.

Es war nicht möglich die gewünschte Menge an Sipernat® D17 zu dosieren.

Beispiel 4 (Vergleichsbeispiel)

Es wurde verfahren wie unter Beispiel 1. Sipernat® D17 wurde über ein Rohr mit einem Innendurchmesser von 8 mm dosiert. Das Rohr endete oberhalb der bewegten Produktbettoberfläche.

Der Durchlaufmischer wurde mehrere Stunden störungsfrei betrieben.

Die beschichteten wasserabsorbierenden Polymerpartikel wurden analysiert. Die Ergebnisse sind in der Tabelle 1 zusammengefasst.

Tab. 1: Ergebnisse

| Beispiel | Anticaking | Staub in Abluft |
|---|---|---|
| 1 | 89% | O |
| 2*) | 35% | ++ |
| 3*) | -**) | -**) |
| 4*) | 54% | + |
| *) Vergleichsbeispiel<br>**) nicht bestimmt | | |

## Patentansprüche

**1.** Verfahren zur Herstellung wasserabsorbierender Polymerpartikel durch Polymerisation einer Monomerlösung oder

-suspension, enthaltend

a) mindestens ein ethylenisch ungesättigtes, säuregruppentragendes Monomer, das zumindest teilweise neutralisiert sein kann,
b) mindestens einen Vernetzer,
c) optional ein oder mehrere mit den unter a) genannten Monomeren copolymerisierbare ethylenisch und/oder allylisch ungesättigte Monomere und
d) optional ein oder mehrere wasserlösliche Polymere,

umfassend Trocknung, Mahlung und Klassierung, wobei in einem Mischer wasserabsorbierende Polymerpartikel mit einem partikulären Feststoff beschichtet werden, **dadurch gekennzeichnet, dass** der partikuläre Feststoff mittels eines Gasstroms dispergiert wird und die Zuführung des dispergierten partikulären Feststoffs im Mischer unterhalb der Produktbettoberfläche endet.

**2.** Verfahren gemäß Anspruch 1, **dadurch gekennzeichnet, dass** das Verfahren mindestens eine Nachvernetzung umfasst.

**3.** Verfahren gemäß Anspruch 2, **dadurch gekennzeichnet, dass** nachvernetzte Polymerpartikel mit dem partikulären Feststoff beschichtet werden.

**4.** Verfahren gemäß einem der Ansprüche 1 bis 3, **dadurch gekennzeichnet, dass** das Verhältnis von Massenstrom an partikulärem Feststoff zu Dispergiergasmassenstrom mindestens 0,05 beträgt.

**5.** Verfahren gemäß einem der Ansprüche 1 bis 4, **dadurch gekennzeichnet, dass** die dem Mischer zugeführten wasserabsorbierenden Polymerpartikel einen volumengemittelten mittleren Durchmesser von mindestens 200 $\mu$m aufweisen.

**6.** Verfahren gemäß einem der Ansprüche 1 bis 5, **dadurch gekennzeichnet, dass** der partikuläre Feststoff einen volumengemittelten mittleren Durchmesser von weniger als 50 $\mu$m aufweist.

**7.** Verfahren gemäß einem der Ansprüche 1 bis 6, **dadurch gekennzeichnet, dass** die Zuführung einen kreisrunden Querschnitt aufweist.

**8.** Verfahren gemäß einem der Ansprüche 1 bis 7, **dadurch gekennzeichnet, dass** ein kontinuierlicher Mischer verwendet wird.

**9.** Verfahren gemäß einem der Ansprüche 1 bis 8, **dadurch gekennzeichnet, dass** der Füllgrad des Mischers von 30 bis 80% beträgt.

**10.** Verfahren gemäß einem der Ansprüche 1 bis 9, **dadurch gekennzeichnet, dass** die dem Mischer zugeführten wasserabsorbierenden Polymerpartikel einen Wassergehalt von weniger als 20 Gew.-% aufweisen.

**11.** Verfahren gemäß einem der Ansprüche 1 bis 10, **dadurch gekennzeichnet, dass** die dem Mischer zugeführten wasserabsorbierenden Polymerpartikel eine Temperatur von 40 bis 80 °C aufweisen.

**12.** Verfahren gemäß einem der Ansprüche 1 bis 11, **dadurch gekennzeichnet, dass** der partikuläre Feststoff mittels eines Ringspaltinjektors dispergiert wird.

**13.** Verfahren gemäß Anspruch 12, **dadurch gekennzeichnet, dass** der Druckabfall des Dispergiergases im Ringspaltinjektor mindestens 0,5 bar beträgt.

**14.** Verfahren gemäß einem der Ansprüche 1 bis 13, **dadurch gekennzeichnet, dass** der Mischer ein Horizontalmischer ist.

**15.** Verfahren gemäß Anspruch 14, **dadurch gekennzeichnet, dass** die Verweilzeit der wasserabsorbierenden Polymerpartikel im Horizontalmischer von 1 bis 180 Minuten beträgt.

**16.** Verfahren gemäß Anspruch 14 oder 15, **dadurch gekennzeichnet, dass** die Umfangsgeschwindigkeit der

Mischwerkzeuge im Horizontalmischer von 0,1 bis 10 m/s beträgt.

**17.** Verfahren gemäß einem der Ansprüche 14 bis 16, **dadurch gekennzeichnet, dass** die wasserabsorbierenden Polymerpartikel im Horizontalmischer mit einer Geschwindigkeit bewegt werden, die einer Froude-Zahl von 0,01 bis 6 entspricht.

**18.** Verfahren gemäß einem der Ansprüche 14 bis 17, **dadurch gekennzeichnet, dass** der dispergierte partikuläre Feststoff im Gleichstrom zur Rotationsrichtung des Horizontalmischers zugeführt wird.

**19.** Verfahren gemäß einem der Ansprüche 1 bis 18, **dadurch gekennzeichnet, dass** der partikuläre Feststoff pyrogene Kieselsäure und/oder Fällungskieselsäure ist.

**20.** Verfahren gemäß einem der Ansprüche 1 bis 19, **dadurch gekennzeichnet, dass** die mit dem partikulären Feststoff beschichteten wasserabsorbierenden Polymerpartikel eine Zentrifugenretentionskapazität von mindestens 15 g/g aufweisen.

## Claims

**1.** A process for producing water-absorbing polymer particles by polymerizing a monomer solution or suspension comprising

a) at least one ethylenically unsaturated acid-bearing monomer which may be at least partly neutralized,
b) at least one crosslinker,
c) optionally one or more ethylenically and/or allylically unsaturated monomers copolymerizable with the monomers specified under a) and
d) optionally one or more water-soluble polymers,

comprising drying, grinding and classifying, water-absorbing polymer particles being coated with a particulate solid in a mixer, wherein particulate solid is dispersed by means of a gas stream and the supply of the dispersed particulate solid in the mixer ends below the product bed surface.

**2.** The process according to claim 1, which comprises at least one postcrosslinking.

**3.** The process according to claim 2, wherein postcrosslinked polymer particles are coated with the particulate solid.

**4.** The process according to any of claims 1 to 3, wherein the ratio of mass flow rate of particulate solid to dispersion gas mass flow rate is at least 0.05.

**5.** The process according to any of claims 1 to 4, wherein the water-absorbing polymer particles fed to the mixer have a volume-average mean diameter of at least 200 μm.

**6.** The process according to any of claims 1 to 5, wherein the particulate solid has a volume-average mean diameter of less than 50 μm.

**7.** The process according to any of claims 1 to 6, wherein the supply has a circular cross section.

**8.** The process according to any of claims 1 to 7, wherein a continuous mixer is used.

**9.** The process according to any of claims 1 to 8, wherein the fill level of the mixture is from 30 to 80%.

**10.** The process according to any of claims 1 to 9, wherein the water-absorbing polymer particles fed to the mixer have a water content of less than 20% by weight.

**11.** The process according to any of claims 1 to 10, wherein the water-absorbing polymer particles fed to the mixer have a temperature of from 40 to 80°C.

**12.** The process according to any of claims 1 to 11, wherein the particulate solid is dispersed by means of an annular

gap injector.

**13.** The process according to claim 12, wherein the pressure drop of the dispersion gas in the annular gap injector is at least 0.5 bar.

**14.** The process according to any of claims 1 to 13, wherein the mixer is a horizontal mixer.

**15.** The process according to claim 14, wherein the residence time of the water-absorbing polymer particles in the horizontal mixer is from 1 to 180 minutes.

**16.** The process according to claim 14 or 15, wherein the peripheral speed of the mixing tools in the horizontal mixer is from 0.1 to 10 m/s.

**17.** The process according to any of claims 14 to 16, wherein the water-absorbing polymer particles are moved in the horizontal mixer with a speed which corresponds to a Froude number of from 0.01 to 6.

**18.** The process according to any of claims 14 to 17, wherein the dispersed particulate solid is supplied in cocurrent to the direction of rotation of the horizontal mixer.

**19.** The process according to any of claims 1 to 18, wherein the particulate solid is fumed silica and/or precipitated silica.

**20.** The process according to any of claims 1 to 19, wherein the water-absorbing polymer particles coated with the particulate solid have a centrifuge retention capacity of at least 15 g/g.

**Revendications**

**1.** Procédé pour la production de particules de polymère absorbant l'eau, par polymérisation d'une solution ou suspension de monomères, contenant

a) au moins un monomère à insaturation éthylénique, portant des groupes acides, qui peut être au moins partiellement neutralisé,
b) au moins un agent de réticulation,
c) en option un ou plusieurs monomères à insaturation éthylénique et/ou allylique, copolymérisables avec les monomères nommés en a) et
d) en option un ou plusieurs polymères hydrosolubles,

comprenant séchage, broyage et classification, dans lequel des particules de polymère absorbant l'eau sont enrobées avec un solide particulaire dans un mélangeur, **caractérisé en ce que** le solide particulaire est dispersé au moyen d'un courant de gaz et le conduit d'arrivée du solide particulaire dispersé débouche dans le mélangeur au-dessous de la surface du lit de produit.

**2.** Procédé selon la revendication 1, **caractérisé en ce que** le procédé comprend au moins une post-réticulation.

**3.** Procédé selon la revendication 2, **caractérisé en ce qu'**on enrobe avec le solide particulaire des particules de polymère post-réticulées.

**4.** Procédé selon l'une quelconque des revendications 1 à 3, **caractérisé en ce que** le rapport du courant massique de solide particulaire au courant massique de gaz de dispersion est d'au moins 0,05.

**5.** Procédé selon l'une quelconque des revendications 1 à 4, **caractérisé en ce que** les particules de polymère absorbant l'eau qui sont envoyées au mélangeur présentent un diamètre moyen moyenné en volume d'au moins 200 $\mu$m.

**6.** Procédé selon l'une quelconque des revendications 1 à 5, **caractérisé en ce que** le solide particulaire présente un diamètre moyen moyenné en volume de moins de 50 $\mu$m.

**7.** Procédé selon l'une quelconque des revendications 1 à 6, **caractérisé en ce que** le conduit d'arrivée présente une

section transversale circulaire.

8. Procédé selon l'une quelconque des revendications 1 à 7, **caractérisé en ce qu'**on utilise un mélangeur continu.

9. Procédé selon l'une quelconque des revendications 1 à 8, **caractérisé en ce que** le degré de remplissage du mélangeur est de 30 à 80 %.

10. Procédé selon l'une quelconque des revendications 1 à 9, **caractérisé en ce que** les particules de polymère absorbant l'eau qui sont envoyées au mélangeur présentent une teneur en eau de moins de 20 % en poids.

11. Procédé selon l'une quelconque des revendications 1 à 10, **caractérisé en ce que** les particules de polymère absorbant l'eau qui sont envoyées au mélangeur présentent une température de 40 à 80 °C.

12. Procédé selon l'une quelconque des revendications 1 à 11, **caractérisé en ce que** le solide particulaire est dispersé au moyen d'un injecteur à espace annulaire.

13. Procédé selon la revendication 12, **caractérisé en ce que** la chute de pression du gaz de dispersion dans l'injecteur à espace annulaire est d'au moins 0,5 bar.

14. Procédé selon l'une quelconque des revendications 1 à 13, **caractérisé en ce que** le mélangeur est un mélangeur horizontal.

15. Procédé selon la revendication 14, **caractérisé en ce que** le temps de séjour des particules de polymère absorbant l'eau dans le mélangeur horizontal est de 1 à 180 minutes.

16. Procédé selon la revendication 14 ou 15, **caractérisé en ce que** la vitesse périphérique des outils de mélange dans le mélangeur horizontal est de 0,1 à 10 m/s.

17. Procédé selon l'une quelconque des revendications 14 à 16, **caractérisé en ce que** les particules de polymère absorbant l'eau sont mises en mouvement dans le mélangeur horizontal à une vitesse qui correspond à un nombre de Froude de 0,01 à 6.

18. Procédé selon l'une quelconque des revendications 14 à 17, **caractérisé en ce que** le solide particulaire dispersé est envoyé en co-courant par rapport au sens de rotation du mélangeur horizontal.

19. Procédé selon l'une quelconque des revendications 1 à 18, **caractérisé en ce que** le solide particulaire est de l'acide silicique pyrogéné et/ou de l'acide silicique précipité.

20. Procédé selon l'une quelconque des revendications 1 à 19, **caractérisé en ce que** les particules de polymère absorbant l'eau, enrobées avec le solide particulaire, présentent une capacité de rétention centrifuge d'au moins 15 g/g.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3523617 A1
- JP 63039934 A
- WO 9737695 A1
- DE 102005032236 A1
- EP 530438 A1
- EP 547847 A1
- EP 559476 A1
- EP 632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 200232962 A2
- EP 343427 A2
- DE 19941423 A1
- EP 686650 A1
- WO 200145758 A1
- WO 2000138402 A1
- DE 3825366 A1
- US 6241928 B
- EP 83022 A2
- EP 543303 A1
- EP 937736 A2
- DE 3314019 A1
- EP 450922 A2
- DE 10204938 A1
- US 6239230 B
- DE 4020780 C1
- DE 19807502 A1
- DE 19807992 C1
- DE 19854573 A1
- DE 19854574 A1
- DE 10204937 A1
- DE 10334584 A1
- EP 1199327 A2
- WO 200331482 A1
- DE 3713601 A1
- EP 0640330 A1
- WO 0010619 A1


### In der Beschreibung aufgeführte Nicht-Patentliteratur


- **F.L. Buchholz ; A.T. Graham.** Modern Superabsorbent Polymer Technology. Wiley-VCH, 1998, 71-103